# EUROPEAN PATENT APPLICATION

(11) **EP 4 253 808 A1**
(43) Date of publication of application: **04.10.2023**
(21) Application number: 21897722.1
(22) Date of filing: 11.11.2021
(51) Int. Cl.: F16K 7/12, F16K 7/14

(54) **VALVE**

(30) Priority: 26.11.2020 JP 2020195968
(71) Applicant: Eagle Industry Co., Ltd., Minato-ku Tokyo 105-8587 (JP)
(72) Inventor: KONDO, Takayuki, Tokyo 105-8587 (JP)
(74) Representative: WSL Patentanwälte Partnerschaft mbB
(86) International application number: PCT/JP2021/041465
(87) International publication number: WO 2022/113748

(57) **Abstract**

Provided is a valve with high pressure resistance. In a valve 1 which is axially driven by a drive source 3 to move a valve body 52 to contact and separate from a valve seat 51 in a valve chamber 4 to control a fluid, a diaphragm 6 has a center axially sandwiched by the valve body 52 and a rod 32 of the drive source 3 and partitions the valve chamber 4 and the drive source 3 in a sealed state.

## Description

### {TECHNICAL FIELD}

The present invention relates to a valve which controls a fluid.

### {BACKGROUND ART}

A valve used to control a fluid in various industrial fields includes a valve seat and a valve body contacting and separating from the valve seat. The valve body of the valve can control the pressure or flow rate of the fluid by adjusting the valve opening degree with respect to the valve seat.

As such a valve, a spool valve in which a spool corresponding to a valve body moves in parallel to an opening corresponding to a valve seat, a butterfly valve in which a valve body has a rotation shaft, and a lift valve in which a valve body moves perpendicular to an opening corresponding to a valve seat are exemplified as typical valves. Among these valves, the lift valve is the most suitable for controlling the flow rate or the pressure.

As the lift valve, for example, a hydrogen purge valve that controls the supply of hydrogen to a power generation stack of a polymer electrolyte fuel cell can be exemplified. The fuel cell generates electricity through an electrochemical reaction at a cathode by supplying compressed air to the cathode of the power generation stack and supplying hydrogen having a pressure corresponding to the pressure of the air to an anode. Further, the fuel cell can adjust the power generation amount by changing the pressure of the air supplied to the cathode. By performing purging by controlling the opening and closing of the hydrogen purge valve to replace the hydrogen gas in the power generation stack with a new hydrogen gas, impurities accumulated in the power generation stack are removed as the operating time elapses to prevent a decrease in the power generation voltage.

A hydrogen purge valve of Patent Citation 1 adjusts a pressure of hydrogen by moving a valve body which has a movable iron core fixed to a rod portion to and from a valve seat by a driving force of a solenoid. Since a rubber diaphragm is provided between the rod portion of the valve body and a valve housing and the solenoid is sealed from a valve chamber, it is possible to prevent the solenoid from malfunctioning due to inclusion of impurities or freezing of moisture when hydrogen, impurities, moisture, and the like in the valve chamber enter the solenoid.

### {CITATION LIST}

### {Patent Literature}

Patent Citation 1: JP 2004-179118 A (Page 10, FIG. 3)

### {SUMMARY OF INVENTION}

### {Technical Problem}

Although the hydrogen purge valve of Patent Citation 1 prevents the solenoid from being affected by hydrogen or the like in the valve chamber, the rubber diaphragm has a configuration in which an outer edge is crimped to the housing to be fixed and sealed and an opening inner edge is fitted to an outer peripheral groove of the rod portion to be fixed and sealed. Therefore, stress is applied to the opening inner edge of the rubber diaphragm not only in the axial direction but also in the radial direction in accordance with the driving of the rod portion, the sealed state between the opening inner edge of the rubber diaphragm and the rod portion is not maintained for a long period of time, and hence there is a risk that high-pressure hydrogen leaks from the valve chamber to a space on the side of the solenoid.

The present invention has been made in view of such problems and an object thereof is to provide a valve with high pressure resistance.

### {Solution to Problem}

In order to solve the foregoing problem, a valve according to the present invention is a valve which is axially driven by a drive source to move a valve body to and from a valve seat in a valve chamber to control a fluid, including a diaphragm having a center axially sandwiched by the valve body and a rod of the drive source and partitioning the valve chamber and the drive source in a sealed state. According to the aforesaid feature of the present invention, since the diaphragm is axially sandwiched by the valve body and the rod to form a partition wall between the valve chamber and the drive source and to partition them in a sealed state, a large stress is not locally applied from the valve body to the diaphragm at the time of driving. Thus, the valve chamber and the drive source can be maintained in a sealed state. Accordingly, a valve with high pressure resistance can be provided.

It may be preferable that the diaphragm is configured for contacting and separating from the rod. According to this preferable configuration, uniform stress is applied to the diaphragm from the rod.

It may be preferable that the diaphragm is configured for contacting and separating from the valve body. According to this preferable configuration, uniform stress is applied to the diaphragm from the valve body.

It may be preferable that the diaphragm is formed of metal. According to this preferable configuration, a high pressure can be handled. Further, in a configuration in which the diaphragm can contact and separate from the rod, the rod tip is likely to slide along the surface of the diaphragm and a large force is unlikely to act on the diaphragm from the rod in the radial direction.

It may be preferable that a biasing member is provided to bias the valve body in an opening direction of the valve. According to this preferable configuration, the valve body can be smoothly moved from the closed position to the open position together with the diaphragm.

It may be preferable that the valve body has a sheet shape having a penetration portion penetrating in an axial direction. According to this preferable configuration, a valve which is short in the axial direction can be provided and the operation of the valve body is stabilized since a pressure difference is unlikely to occur between the front and back of the valve body.

It may be preferable that the valve body is formed of rubber. According to this preferable configuration, since the valve body is reliably seated on the valve seat, the closed state is easily maintained.

It may be preferable that an outer edge of the diaphragm is fixed in a sealed state by a valve housing having the valve chamber and a casing of the drive source. According to this preferable configuration, the radial position of the diaphragm is stabilized.

It may be preferable that the outer edge of the diaphragm is fixed to the valve housing through an outer edge of the valve body in a sealed state. According to this preferable configuration, the valve body and the diaphragm are easily positioned in the radial direction.

### {BRIEF DESCRIPTION OF DRAWINGS}

FIG. 1 is a cross-sectional view illustrating a valve according to an embodiment of the present invention, in a closed state.
FIG. 2 is a main enlarged cross-sectional view illustrating the valve in the closed state.
FIG. 3A is a top view of a valve body and FIG. 3B is a cross-sectional view taken along a line A-A of FIG. 3A.
FIG. 4A is a top view of a diaphragm and FIG. 4B is a cross-sectional view taken along a line B-B of FIG. 4A.
FIG. 5 is a cross-sectional view illustrating the valve in an open state.
FIG. 6 is a main enlarged cross-sectional view illustrating the valve in the open state.

### {DESCRIPTION OF EMBODIMENTS}

A mode for carrying out a valve according to the present invention will be described with reference to an embodiment. Although the embodiment will be described with a hydrogen purge valve as an example, the embodiment can also be applied to other uses.

### {Embodiment}

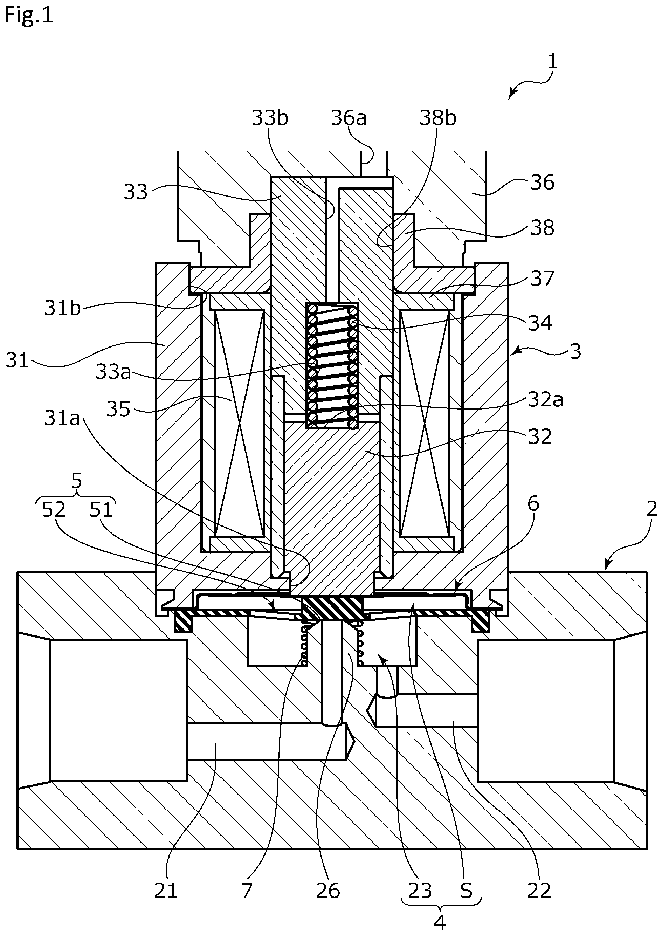

A hydrogen purge valve according to an embodiment of the present invention will be described with reference to FIGS. 1 to 6. Hereinafter, the right and left sides as viewed from the front side of FIG. 1 will be described as the right and left sides of the hydrogen purge valve.

The hydrogen purge valve of the present invention is incorporated in a fuel cell system mounted on a vehicle such as an automobile and is used to perform purging by controlling the opening and closing of the hydrogen purge valve to replace a hydrogen gas in a power generation stack with a new hydrogen gas.

First, the fuel cell system will be described. The fuel cell system includes a power generation stack, a hydrogen supply unit, and a pressure adjustment unit. The power generation stack is constructed by stacking a plurality of cells formed by sandwiching a solid polymer electrolyte membrane between an anode and a cathode from both sides. The hydrogen supply unit supplies air to the cathode. The pressure adjustment unit adjusts the pressure of hydrogen supplied to the anode according to the pressure of air supplied to the cathode. In the fuel cell system, hydrogen ions generated at the anode pass through the solid polymer electrolyte membrane and undergo an electrochemical reaction at the cathode to generate electricity. Also, the power generation amount can be adjusted by changing the pressure of the air supplied to the cathode.

Further, a circulation path is formed between the anode and the pressure adjustment unit. The hydrogen purge valve is assembled to the circulation path. In such a fuel cell system, the excess hydrogen gas in the power generation stack is discharged to the outside and purged by controlling the opening and closing of the hydrogen purge valve and is replaced with a new hydrogen gas. Accordingly, impurities that have accumulated in the power generation stack are removed as the operating time elapses to suppress a decrease in power generation voltage.

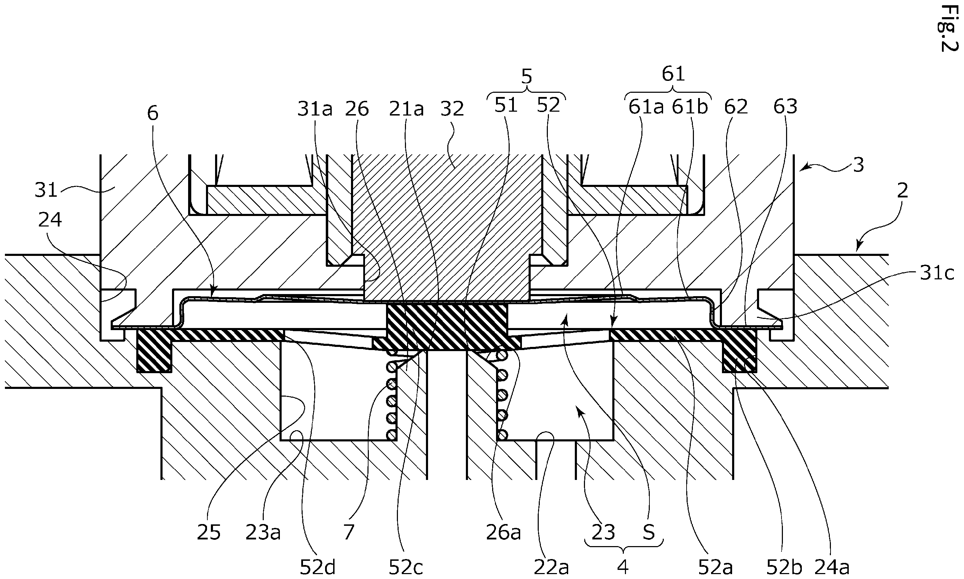

As illustrated in FIGS. 1 and 2, a hydrogen purge valve 1 of this embodiment mainly includes a valve housing 2 which is a valve housing, a solenoid 3 which is a drive source, a valve 5, a diaphragm 6, and a coil spring 7 which is a biasing member (also called as biasing means). The valve housing 2 is connected between a circulation path which supplies hydrogen to the power generation stack and a discharge pipe different from the circulation path. The solenoid 3 is connected and fixed to the valve housing 2. The valve 5 controls a fluid inside a valve chamber 4 formed between the valve housing 2 and the solenoid 3. The diaphragm 6 defines the valve chamber 4 and the solenoid 3 in a sealed state. The coil spring 7 biases a valve body 52 in an opening direction.

The valve housing 2 is provided with an inflow side passage 21, an outflow side passage 22, and a communication path 23. The inflow side passage 21 communicates with the anode of the power generation stack in the circulation path. The outflow side passage 22 communicates with a discharge pipe different from the circulation path. The communication path 23 forms the valve chamber 4 together with an inner space S to be described later by communicating the inflow side passage 21 and the outflow side passage 22 with each other.

Specifically, particularly as illustrated in FIG. 2, the valve housing 2 is provided with an accommodation concave portion 24 which opens upward. The solenoid 3 is connected to the accommodation concave portion 24 while the lower end is accommodated. Further, a concave portion 25 which communicates with the accommodation concave portion 24 is formed at the center of the bottom portion of the accommodation concave portion 24. A shaft portion 26 which protrudes upward is formed at the center of the bottom portion of the concave portion 25. That is, a space other than the shaft portion 26 in the concave portion 25 constitutes a communication path 23 having an annular shape in the top view.

The inflow side passage 21 has a substantially L-shaped cross-section. Further, the upstream side of the inflow side passage 21 extends in the right and left direction and the downstream side thereof extends in the up and down direction at the center of the shaft portion 26. An opening portion 21a of the downstream end of the inflow side passage 21 is formed on an upper end surface 26a of the shaft portion 26 to face upward.

The upper end surface 26a of the shaft portion 26 has a tapered shape extending from the peripheral edge of the opening portion 21a of the inflow side passage 21 toward the outer peripheral surface of the shaft portion 26 to be obliquely inclined downward. Further, the peripheral edge of the opening portion 21a which is the inner edge of the upper end surface 26a is the valve seat 51.

Further, the outflow side passage 22 has a substantially L-shaped cross-section. Further, the upstream side of the outflow side passage 22 extends in the up and down direction and the downstream side thereof extends in the right and left direction. An opening portion 22a of the upstream end of the outflow side passage 22 is formed on a bottom surface 23a constituting the communication path 23 to face upward.

The solenoid 3 mainly includes a cylindrical casing 31, a movable iron core 32 which is a rod, a center post 33, a coil spring 34, and an excitation coil 35. An opening portion 31a is formed at the lower portion of the cylindrical casing 31. The movable iron core 32 is disposed to be movable in the axial direction (that is, the up and down direction) with respect to the lower opening portion 31a of the casing 31. The center post 33 is a fixed iron core which is disposed not to be movable in the axial direction with respect to an opening portion 38b of an upper plate 38. The coil spring 34 gives a biasing force in a direction in which the movable iron core 32 and the center post 33 are separated from each other in the axial direction. The coil 35 is wound on the outside of the \center post 33 through a bobbin.

An annular convex portion 31c is formed at the lower end portion of the casing 31. The annular convex portion 31c protrudes in an annular shape toward the valve housing 2. The casing 31 is inserted into the accommodation concave portion 24 of the valve housing 2 while sandwiching the diaphragm 6 and the valve body 52 constituting the valve 5 between the valve housing 2 and the annular convex portion 31c and is crimped and fixed to the valve housing 2. Additionally, the fixing method is not limited to crimping, and may be welding, screwing, or the like.

The upper end portion of the movable iron core 32 is provided with a fitting concave portion 32a into which the lower end portion of the coil spring 34 is fitted.

Further, a fitting concave portion 33a to which the upper end portion of the coil spring 34 is fitted is provided below the center post 33. Further, a communication hole 33b which penetrates to the fitting concave portion 33a is provided above the center post 33. Accordingly, the fitting concave portion 33a communicates with a discharge hole 36a of a mold 36 to be described later through the communication hole 33b. In addition, the discharge hole 36a of the mold 36 communicates with the outside, that is, the atmosphere.

Accordingly, since the atmosphere and the space inside the casing 31 can breathe through the communication hole 33b and the discharge hole 36a when the movable iron core 32 is operated as described later, the operation of the movable iron core 32 is prevented from being hindered by the pressure of the fluid in the space in the movement direction of the movable iron core 32.

The coil 35 wound on the bobbin 37 is integrated with the upper plate 38 while the upper plate 38 is disposed thereabove. The coil 35 is integrated with the upper plate 38 by the mold 36 formed of synthetic resin. The center post 33 is assembled inside the coil 35 to penetrate the opening portion 38b of the upper plate 38 in the up and down direction. Further, the movable iron core 32 is assembled below the center post 33 through the coil spring 34. The discharge hole 36a which communicates with the communication hole 33b of the center post 33 is formed at a portion located above the upper plate 38. Further, the movable iron core 32, the coil 35, the upper plate 38, and the like are arranged inside the casing 31. Further, the coil 35 is fixed to the casing 31 by crimping the upper plate 38 disposed on the upper opening portion 31b of the casing 31 to the casing 31. Additionally, the fixing method is not limited to crimping, and may be welding, screwing, or the like.

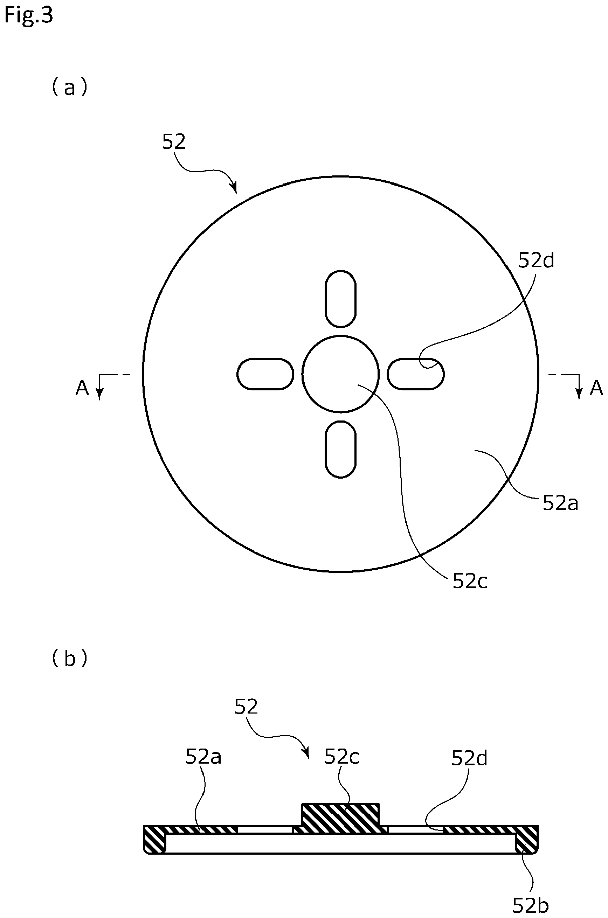

As illustrated in FIG. 3, the valve body 52 mainly includes a columnar contact portion 52c, an annular protruding streak portion 52b, and a disk portion 52a. The contact portion 52c is formed of elastically deformable rubber and is disposed at the center portion of the valve body 52. The protruding streak portion 52b is disposed at the outer edge of the valve body 52. The disk portion 52a extends in the horizontal direction to connect the lower portion of the contact portion 52c to the upper portion of the protruding streak portion 52b.

The contact portion 52c is formed to be thicker than other portions. Further, a through-hole 52d which is a penetration portion is formed in the disk portion 52a around the contact portion 52c. In this embodiment, four through-holes 52d are arranged around the contact portion 52c at the same intervals in the circumferential direction. In addition, the number and shape of the through-holes 52d may be freely changed. Furthermore, the penetration portion may be a notch or the like, but is preferably a through-hole from the viewpoint of sealing performance and structural strength of the outer edge of the valve body.

Further, returning to FIG. 2, the protruding streak portion 52b is press-inserted into an annular groove 24a formed at the bottom portion of the accommodation concave portion 24 and opening upward. Accordingly, the valve body 52 is positioned to the valve housing 2. That is, it is easy to position the contact portion 52c of the valve body 52 and the valve seat 51.

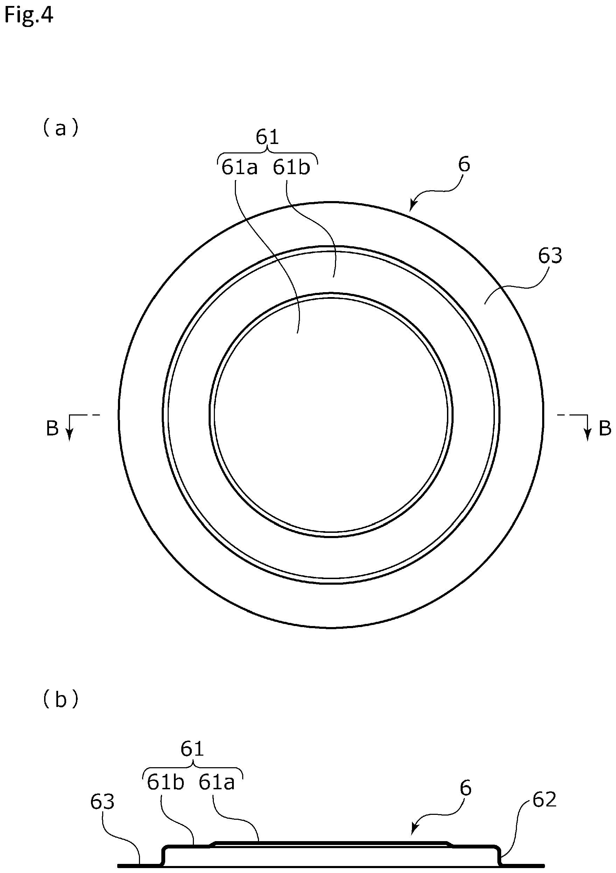

As illustrated in FIG. 4, the diaphragm 6 is formed of a metal thin plate and mainly includes a disk portion 61, an annular portion 62, and an outer edge portion 63 which is an outer edge of the diaphragm 6. The disk portion 61 has a circular shape in the top view. The annular portion 62 protrudes downward in an annular shape from the outer peripheral edge of the disk portion 61. The outer edge portion 63 extends radially outward from the lower end of the annular portion 62.

Since the disk portion 61 is formed of a metal thin plate, the disk portion is easily elastically deformed in the up and down direction, that is, the thickness direction of the disk portion 61.

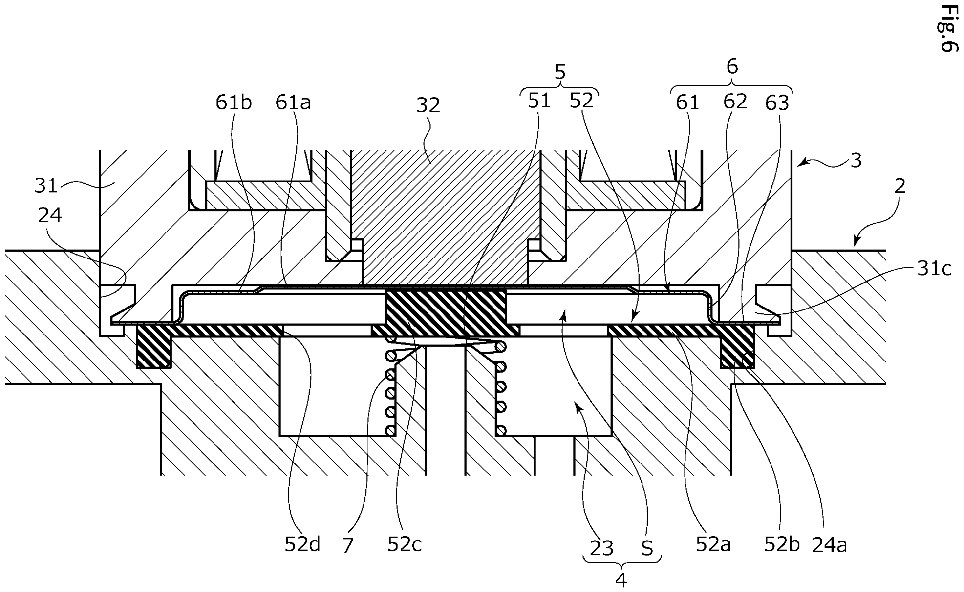

Further, the disk portion 61 is formed in a stepped shape in which a center portion 61a is disposed above an outer edge portion 61b. Accordingly, since the annular portion 62 of the diaphragm 6 is separated below the bottom surface of the casing 31 of the solenoid 3, the diaphragm 6 is easily elastically deformed around the corners of the disk portion 61 and the annular portion 62 as fulcrums without the interference with the casing 31 (see FIGS. 2 and 6). In addition, the disk portion 61 may have two or more stepped portions or may have no stepped portion.

Returning to FIG. 2, the outer edge portion 63 is disposed above the protruding streak portion 52b of the valve body 52. Further, the outer edge portion 63 is welded to the annular convex portion 31c of the casing 31 over the entire circumference. Accordingly, the casing 31 is sealed by the diaphragm 6 and the fluid of the valve chamber 4 does not enter the excitation coil 35. The outer edge portion 63 and the protruding streak portion 52b are sandwiched between the annular convex portion 31c of the casing 31 and the valve housing 2. Accordingly, the diaphragm 6 and the valve body 52 are prevented from being separated from between the casing 31 and the valve housing 2. Additionally, a seal member may be sandwiched between the outer edge portion 63 of the diaphragm 6 and the annular convex portion 31c of the casing 31 instead of the welding of the outer edge portion 63 of the diaphragm 6 and the annular convex portion 31c of the casing 31.

In a state in which the valve body 52 and the diaphragm 6 are disposed between the valve housing 2 and the casing 31, the contact portion 52c of the valve body 52 is disposed above the valve seat 51. Further, the movable iron core 32 is disposed above the contact portion 52c of the valve body 52 with the diaphragm 6 interposed therebetween. Additionally, the valve body 52 is biased upward by the coil spring 7 externally fitted to the shaft portion 26 of the valve housing 2.

Further, the inner space S of the diaphragm 6 and the communication path 23 of the valve housing 2 communicate with each other through the through-hole 52d of the valve body 52 and constitute the valve chamber 4 formed between the valve housing 2 and the solenoid 3.

Next, the opening and closing operation of the hydrogen purge valve 1 will be described.

First, the non-energized state of the hydrogen purge valve 1 will be described. As illustrated in FIGS. 1 and 2, in the non-energized state of the hydrogen purge valve 1, the valve body 52 is pressed downward, that is, in the valve closing direction by the biasing force of the coil spring 34 which is larger than the biasing force of the coil spring 7 and the disk portion 61 of the diaphragm 6 and the disk portion 52a of the valve body 52 are elastically deformed downward. Accordingly, the lower surface of the contact portion 52c of the valve body 52 is seated on the valve seat 51 and the valve 5 is closed.

At this time, the upper surface of the contact portion 52c of the valve body 52 comes into contact with the lower surface of the disk portion 61 of the diaphragm 6. On the other hand, the disk portion 52a of the valve body 52 does not come into contact with the disk portion 61 of the diaphragm 6. Therefore, the disk portion 61 of the diaphragm 6 and the disk portion 52a of the valve body 52 do not influence each other and the contact portion 52c of the valve body 52 can be smoothly operated.

As described above, since the upper end surface 26a of the shaft portion 26 is formed in a tapered shape, the peripheral edge of the opening portion 21a of the inflow side passage 21, that is, the valve seat 51 is narrow and the contact portion 52c of the valve body 52 can be reliably brought into contact with the valve seat 51. Therefore, the sealing performance between the inflow side passage 21 and the valve chamber 4 can be ensured.

Further, the upper end surface 26a of the shaft portion 26 extends from the valve seat 51 toward the outer peripheral surface of the shaft portion 26 to be obliquely inclined downward. Therefore, in the closed state of the valve 5, a space having a tapered width is not formed between the contact portion 52c of the valve body 52 and the inflow side passage 21 and the fluid inside the inflow side passage 21 can be prevented from being excessively applied in the opening direction of the valve body 52. Thus, the valve body 52 can be prevented from leaking to the valve chamber 4.

In addition, the biasing force of the coil spring 34 is applied as a force F1 that biases the valve body 52 in the closing direction. Further, as a force F2 that biases the valve body 52 in the opening direction, the biasing force of the coil spring 7, the force due to the pressure of the hydrogen gas in the inflow side passage 21 applied to the contact portion 52c, the force due to the pressure of the hydrogen gas in the outflow side passage 22 applied to the diaphragm 6, the elastic restoring force of the diaphragm 6 and the valve body 52, and the electromagnetic force of the solenoid 3 are exerted. At this time, the electromagnetic force of the solenoid 3 is not applied and the force F2 that biases the valve body 52 in the opening direction is smaller than the force F1 that biases the valve body 52 in the closing direction (i.e., F1 > F2).

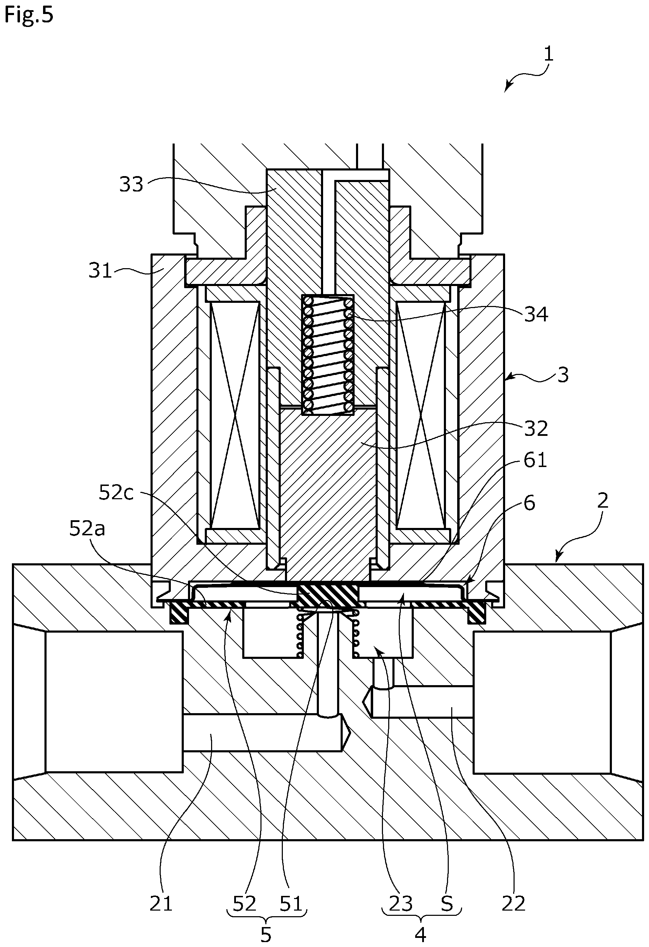

Next, the energized state of the hydrogen purge valve 1 will be described. As illustrated in FIGS. 5 and 6, if an electromagnetic force generated by applying a current to the solenoid 3 exceeds a predetermined value in the energized state of the hydrogen purge valve 1, the movable iron core 32 is pulled toward the center post 33, that is, upward against the biasing force of the coil spring 34. At this time, the disk portion 61 of the diaphragm 6 and the disk portion 52a of the valve body 52 are elastically restored upward, the contact portion 52c of the valve body 52 is separated from the valve seat 51, and the valve 5 is opened.

In this way, the electromagnetic force of the solenoid 3 is added to the force F2 that biases the valve body 52 in the opening direction, the resultant force becomes larger than the biasing force of the coil spring 34, that is, the force F1 that biases the valve body 52 in the closing direction, and the valve 5 is opened (i.e., F1 < F2).

In the open state of the valve 5, the inflow side passage 21 and the outflow side passage 22 of the valve housing 2 communicate with each other through the valve chamber 4. Accordingly, impurities mixed in the hydrogen gas in the power generation stack are discharged to the outside and a new hydrogen gas is supplied from the hydrogen supply unit into the power generation stack (that is, purging is performed).

Further, for example, when the outflow side passage 22 is clogged for some reason and the pressure inside the valve chamber 4 becomes higher than the assumed pressure range in the open state of the valve 5, the center portion 61a of the disk portion 61 of the diaphragm 6 comes into contact with the bottom surface of the casing 31. Accordingly, the contact reduces the stress applied to the diaphragm 6 and the diaphragm 6 is restricted from being deformed so that the disk portion 61 is convex upward. The diaphragm 6 is always deformed in a downward convex range and the convex direction is never reversed from downward to upward. Accordingly, deterioration of the diaphragm 6 can be suppressed. In addition, when the pressure inside the valve chamber 4 is within the assumed pressure range, a slight gap is formed between the center portion 61a of the disk portion 61 of the diaphragm 6 and the bottom surface of the casing 31. Accordingly, it is preferable in that the deformation of the diaphragm 6 becomes smooth.

As described above, the diaphragm 6 is axially sandwiched between the valve body 52 and the movable iron core 32 to form a partition wall between the solenoid 3 and the valve chamber 4 and to partition them in a sealed state. Specifically, since the diaphragm 6 includes the disk portion 61 having a sheet shape or plate shape and the disk portion 61 is formed as a continuous surface such that the through-hole is not formed at the center portion facing the movable iron core 32 and the valve body 52, the sealed state of the valve chamber 4 and the solenoid 3 can be maintained without a locally large stress applied from the valve body 52 to the diaphragm 6 in the radial direction at the time of driving. Accordingly, the valve 5 with high pressure resistance can be provided.

Further, the diaphragm 6 can contact and separate from the movable iron core 32. That is, since the diaphragm 6 is not fixed to the movable iron core 32, it is possible to prevent stress from being applied to the diaphragm 6 in the torsional direction from the movable iron core 32 or stress from being locally applied to the diaphragm 6 during the operation of the movable iron core 32. Thus, uniform stress is applied from the movable iron core 32 to the diaphragm 6.

Further, the diaphragm 6 can contact and separate from the valve body 52. That is, since the diaphragm 6 is not fixed to the valve body 52, it is possible to prevent stress from being applied to the diaphragm 6 in the torsional direction from the valve body 52 or stress from being locally applied to the diaphragm 6 during the operation of the valve body 52. Accordingly, uniform stress is applied from the valve body 52 to the diaphragm 6.

Further, since the diaphragm 6 is formed of metal which has a higher rigidity than rubber or the like, it is possible to handle the high-pressure hydrogen gas flowing into the valve chamber 4. Further, the end portion of the movable iron core 32 and the end portion of the valve body 52 are likely to slide along the surface of the diaphragm 6 and a large force is unlikely to be applied from the movable iron core 32 and the valve body 52 to the diaphragm 6 in the radial direction.

Further, since the coil spring 7 that biases the valve body 52 in the opening direction is provided, the valve body 52 can be smoothly moved from the closed position to the open position together with the diaphragm 6 by the biasing force of the coil spring 7 in the energized state of the hydrogen purge valve 1. Further, since the elastic restoring force of the valve body 52 and the diaphragm 6 is also applied to the valve body 52, the valve body 52 can be smoothly moved from the closed position to the open position.

Further, since the coil spring 34 that biases the valve body 52 in the closing direction is provided, the valve 5 can be reliably in the closed state by the biasing force of the coil spring 34 in the non-energized state of the hydrogen purge valve 1.

Further, since the valve body 52 has a sheet shape having the through-hole 52d in the axial direction, the valve 5 having a short dimension in the axial direction can be provided. Further, a pressure difference is unlikely to occur between the inner space S of the diaphragm 6 disposed above the valve body 52 and the communication path 23 of the valve housing 2 disposed below the valve body 52 and the operation of the valve body 52 is stabilized.

Further, since the valve body 52 is formed of rubber, the valve body 52 is reliably seated on the valve seat 51 and the closed state is easily maintained. In other words, even when the contact portion 52c of the valve body 52 slightly moves with respect to the valve seat 51, the valve body 52 is elastically deformed and the misalignment between the contact portion 52c of the valve body 52 and the valve seat 51 can be absorbed. Accordingly, the valve body 52 can be reliably seated on the valve seat 51. Further, even when the valve body 52 and the diaphragm 6 relatively move in the right and left direction or the torsional direction, the relative movement is absorbed by the elastic force of the valve body 52 and the damage of the valve body 52 or the diaphragm 6 can be prevented.

Further, the outer edge portion 63 of the diaphragm 6 is fixed in a sealed state while being axially sandwiched between the valve housing 2 having the valve chamber 4 and the casing 31 which is the casing of the solenoid 3. Specifically, since the disk portion 61 and the annular portion 62 of the diaphragm 6 are fitted into the annular convex portion 31c of the casing 31, the radial position of the diaphragm 6 is stabilized.

Further, the outer edge portion 63 of the diaphragm 6 is fixed to the valve housing 2 in a sealed state through the valve body 52. Specifically, since the outer edge portion 63 of the diaphragm 6 and the protruding streak portion 52b of the valve body 52 are axially sandwiched between the valve housing 2 and the annular convex portion 31c of the casing 31, it is easy to position the valve body 52 and the diaphragm 6 in the radial direction.

Further, since the outer edge portion 63 of the diaphragm 6 comes into press-contact with the protruding streak portion 52b of the valve body 52 by the valve housing 2 and the annular convex portion 31c of the casing 31, the sealing performance between the protruding streak portion 52b of the valve body 52 and the outer edge portion 63 of the diaphragm 6 is high and the outflow of the fluid of the valve chamber 4 to the outside or the inflow of the external fluid into the valve chamber 4 can be reliably prevented.

Further, since the valve body 52 and the diaphragm 6 are sealed by the rubber valve body 52, a seal member may not be separately provided and the number of components can be decreased. In addition, the valve body 52 and the diaphragm 6 may be sealed by a seal member provided separately.

Further, it is possible to reliably prevent the hydrogen gas from leaking to the outside by sealing by crimping the casing 31 and the valve housing 2 in addition to the sealing by the pressure contact between the protruding streak portion 52b of the valve body 52 and the outer edge portion 63 of the diaphragm 6. In addition, the sealing position between the casing 31 and the valve housing 2 may be only one of the positions described above.

Further, since the protruding streak portion 52b of the valve body 52 is fitted into the groove 24a of the valve housing 2, the contact portion 52c of the valve body 52 and the valve seat 51 are easily positioned.

Although the embodiments of the present invention have been described above with reference to the drawings, the specific configuration is not limited to these examples, and any changes or additions that do not depart from the scope of the present invention are included in the present invention.

For example, in the above-described embodiment, an embodiment in which the diaphragm has a sheet shape or a plate shape has been described, but the shape may be freely changed if the diaphragm partitions the valve chamber and the drive source in a sealed state. For example, the diaphragm may be a bellows having an axially expandable bellows.

Further, in the above-described embodiment, an embodiment in which the diaphragm is formed of metal has been described, but the present invention is not limited thereto. For example, the diaphragm may be formed of rubber or synthetic resin. In addition, it is preferable that the diaphragm is formed of an elastically deformable material.

Further, in the above-described embodiment, an embodiment in which the valve body has the penetration portion has been described, but the valve body may not be provided with the penetration portion. In this case, it is preferable that a communication means may be provided to communicate a space on the side of the valve housing in relation to the valve body with a space on the side of the diaphragm. Since a pressure difference does not occur between the space on the side of the valve housing and the space on the side of the diaphragm due to the communication means, the operation of the valve body can be stabilized.

Further, in the above-described embodiment, an embodiment in which the valve body is formed of rubber has been described, but the present invention is not limited thereto. For example, the valve body may be formed of metal or the like. In addition, it is preferable that the valve body is formed of an elastically deformable material.

Further, in the above-described embodiment, an embodiment in which each of the rod, the diaphragm, and the valve body contacts and separates has been described, but the rod and the diaphragm or one or both of the diaphragm and the valve body may be fixed.

Further, in the above-described embodiment, the normally closed valve has been described, but the present invention is not limited thereto. For example, a normally open valve may be used. In this case, for example, the center post may be disposed on the side of the valve chamber in relation to the movable iron core.

Further, in the above-described embodiment, an embodiment in which the biasing means is the coil spring which is a push spring has been described, but may be a pull spring that biases the valve body in the opening direction. Further, the biasing means is not limited to the coil spring if the valve body can be biased in the opening direction.

Further, in the above-described embodiment, an embodiment in which the biasing means biased in the opening direction and the coil spring biased in the closing direction are provided has been described. However, any one of them may be provided and the other may be omitted. For example, in the case of the normally closed valve, the biasing means biased in the opening direction may not be provided. That is, in the valve open state, the valve body may be separated from the valve seat by the fluid pressure applied in the opening direction of the valve body or the elastic restoring force of the valve body and the diaphragm. Further, for example, in the case of the normally open valve, the coil spring biased in the closing direction may not be provided.

Further, in the above-described embodiment, an embodiment in which the outer edge of the diaphragm and the outer edge of the valve body are axially sandwiched between the valve housing and the casing of the drive source has been described, but the present invention is not limited thereto. For example, the outer edge of the diaphragm and the outer edge of the valve body may be separately fixed to the inner peripheral surface of the valve housing or the casing of the drive source by welding or the like.

Further, in the above-described embodiment, an embodiment in which the outer edge of the diaphragm is fixed to the valve housing through the outer edge of the valve body has been described, but the diaphragm and the valve body may be fixed to a different position of the valve housing or the casing of the drive source.

Further, the present invention is not limited to the case in which the outer edge of the valve body is fixed to the valve housing, but the outer edge may be fixed to the casing of the drive source.

Further, in the above-described embodiment, an embodiment in which the diaphragm and the valve body are natural, that is, not elastically deformed in the valve open state has been described, but the diaphragm and the valve body may be elastically deformed in the valve open state.

Further, in the above-described embodiment, an embodiment in which the valve seat and the valve housing are integrated with each other has been described, but the valve seat may be a member separated from the valve housing.

Further, in the above-described embodiment, an example in which the valve is the hydrogen purge valve has been described, but for example, the valve is suitably used to control the high-pressure fluid, such as an expansion valve disposed between a condenser and an evaporator in an air conditioning system.

Further, in the above-described embodiment, the solenoid has been described as the drive source of the valve body, but the drive source may be freely changed. For example, the valve body may be driven by a pressure difference of the fluid inside the valve chamber and the drive source partitioned by the diaphragm.

### {REFERENCE SIGNS LIST}

- 1: Hydrogen purge valve
- 2: Valve housing (valve housing)
- 3: Solenoid (drive source)
- 4: Valve chamber
- 5: Valve
- 6: Diaphragm
- 7: Coil spring (biasing member)
- 24a: Groove
- 31: Casing
- 31c: Annular convex portion
- 32: Movable iron core (rod)
- 34: Coil spring
- 51: Valve seat
- 52: Valve body
- 52a: Disk portion
- 52b: Protruding streak portion (outer edge of valve body)
- 52c: Contact portion
- 52d: Through-hole
- 61: Disk portion
- 62: Annular portion
- 63: Ring portion (outer edge of diaphragm)

## Claims

1. A valve which is axially driven by a drive source to move a valve body to and from a valve seat in a valve chamber to control a fluid, comprising
a diaphragm having a center axially sandwiched by the valve body and a rod of the drive source and partitioning the valve chamber and the drive source in a sealed state.

2. The valve according to claim 1,
wherein the diaphragm is configured for contacting and separating from the rod.

3. The valve according to claim 1 or 2,
wherein the diaphragm is configured for contacting and separating from the valve body.

4. The valve according to any one of claims 1 to 3,
wherein the diaphragm is formed of metal.

5. The valve according to any one of claims 1 to 4,
wherein a biasing member is provided to bias the valve body in an opening direction of the valve.

6. The valve according to any one of claims 1 to 5,
wherein the valve body has a sheet shape having a penetration portion penetrating in an axial direction.

7. The valve according to any one of claims 1 to 6, wherein the valve body is formed of rubber.

8. The valve according to any one of claims 1 to 7,
wherein an outer edge of the diaphragm is fixed in a sealed state by a valve housing having the valve chamber and a casing of the drive source.

9. The valve according to claim 8,
wherein the outer edge of the diaphragm is fixed to the valve housing through an outer edge of the valve body in a sealed state.
